Europäisches Patentamt

**European Patent Office**

**Office européen des brevets**

(11) Numéro de publication: **0 157 987**

**A2**

(12) **DEMANDE DE BREVET EUROPEEN**

(21) Numéro de dépôt: **84420111.1**

(22) Date de dépôt: **02.07.84**

(51) Int. Cl.⁴: **B 01 F 7/02**
**B 29 B 7/72, G 05 D 24/02**
**C 25 C 3/12, C 04 B 35/52**

(30) Priorité: **19.03.84 LU 85258**

(43) Date de publication de la demande:
**16.10.85 Bulletin 85/42**

(84) Etats contractants désignés:
**AT DE FR GB IT SE**

(71) Demandeur: **ALUMINIUM PECHINEY**
**23, rue Balzac**
**F-75008 Paris(FR)**

(72) Inventeur: **Lemarchand, Jean-Louis**
**rue Florimond Truchet**
**F-73300 St Jean de Maurienne(FR)**

(74) Mandataire: **Pascaud, Claude et al,**
**PECHINEY 28, rue de Bonnel**
**F-69433 Lyon Cedex 3(FR)**

(54) Procédé de régulation, en continu, de la puissance de malaxage des pâtes destinées à la fabrication d'agglomérés carbonés.

㉗ L'invention concerne un procédé de régulation, en continu, du malaxage des pâtes destinées à la fabrication d'agglomérés carbonés, dans un malaxeur muni de dents fixes et d'un arbre, également muni de dents, effectuant un mouvement de rotation combiné avec un mouvement avant-arrière, et comportant également des clapets motorisés contrôlant la sortie de la pâte carbonée.

A chaque cycle de rotation de l'arbre, on mesure, par échantillonnage, l'intensité absorbée par le moteur pour certaines positions particulières de l'arbre dans son mouvement avant-arrière, on compare l'intensité à une valeur de consigne éventuellement corrigée en fonction du niveau de cette intensité par rapport à des seuils prédéterminés, et on introduit cette valeur corrigée dans un régulateur qui détermine, à chaque cycle, le degré d'ouverture des clapets de sortie

FIG.2

- 1 -

PROCEDE DE REGULATION EN CONTINU DE LA PUISSANCE DE MALAXAGE
DES PATES DESTINEES A LA FABRICATION D'AGGLOMERES CARBONES

La présente invention concerne un procédé de régulation en continu de la puissance de malaxage des pâtes destinées à la fabrication d'agglomérés carbonés.

EXPOSE DU PROBLEME

Les agglomérés carbonés sont obtenus par cuisson de pièces mises en forme à partir d'une pâte carbonée résultant du malaxage d'un liant organique et d'un produit carboné en grains calibrés. Selon la destination des agglomérés, la nature du liant (brai de houille, brai de pétrole, brai liquide ou solide) et celle des grains carbonés (coke de houille, coke de pétrole, anthracite, etc...) peut varier sensiblement, mais on passe dans tous les cas par le stade d'un malaxage prolongé, entre le liant et les grains carbonés (dont la répartition granulométrique est soigneusement contrôlée), à une température telle que le liant soit suffisamment fluide (60° à 180° C par exemple) et pendant une durée qui assure une imprégnation aussi parfaite que possible des grains carbonés par le liant. La qualité des électrodes (évaluée notamment par la mesure de la densité géométrique, de la résistivité électrique et de la résistance à l'écrasement) après cuisson, est étroitement liée à l'efficacité du malaxage.

Dans les ateliers modernes pour la production de pâtes carbonées - c'est le cas en particulier de la fabrication des anodes pour la production d'Al par le procédé Hall-Héroult d'électrolyse d'alumine dans la cryolithe - le malaxage du mélange liant plus grains carbonés est effectué dans une chaîne de malaxage continue qui comprend un ou parfois deux malaxeurs en série.

Les figures 1 à 3 explicitent la mise en oeuvre de l'invention.

La figure 1 est une coupe horizontale, très simplifiée, du type de malaxeur auquel s'applique particulièrement l'invention.
Les figures 2 et 3 se rapportent à la mise en oeuvre de l'invention proprement dite.

0157987

- 2 -

ETAT DE LA TECHNIQUE

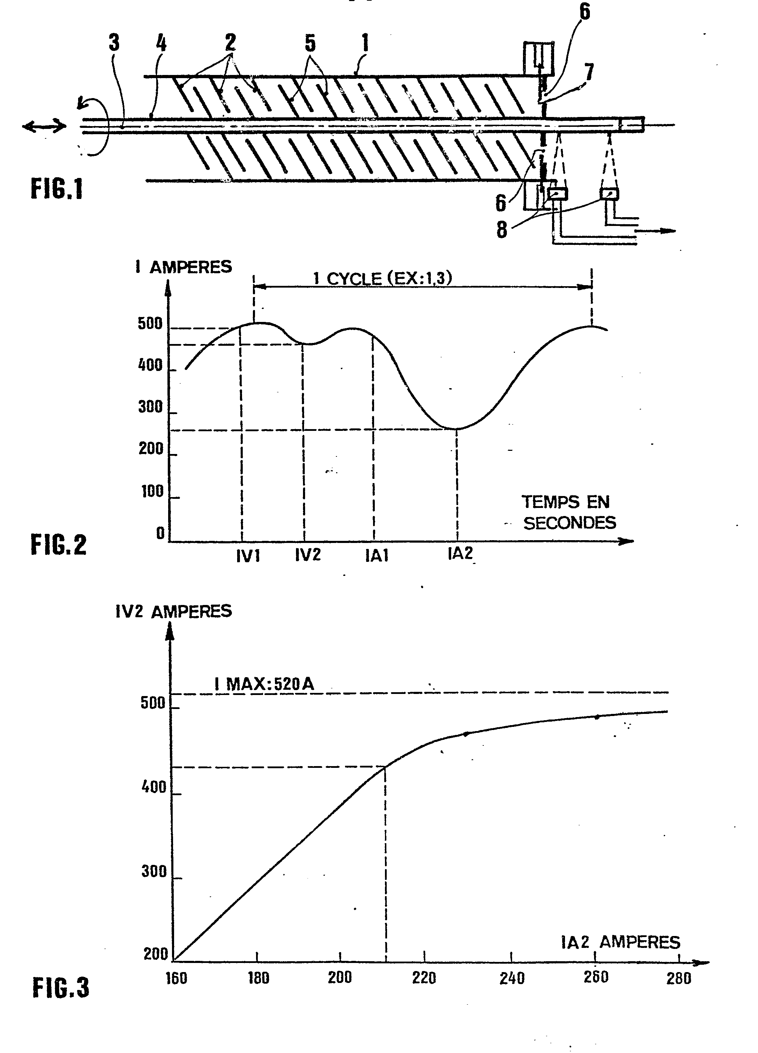

Un type de malaxeur couramment utilisé et qui est schématisé sur la figure 1, est constitué par un corps tubulaire (1) garni de dents fixes (2) inclinées par rapport à l'axe (3) du tube à l'intérieur duquel se meut, selon un mouvement de va et vient synchronisé avec un mouvement de rotation, un arbre (4) lui-même muni de dents (5) coopérant avec les dents fixes afin d'assurer le pétrissage et l'écoulement de la pâte carbonée. Les dents fixes sont disposées selon une ligne hélicoïdale, et l'amplitude du mouvement avant-arrière de l'arbre est ajustée au pas d'implantation des dents fixes. La sortie du (ou des) malaxeurs comporte une buse (6) obturée par des clapets (7) motorisés. L'ouverture et la fermeture de ces clapets peuvent être réglées en fonction de seuils extrêmes de la puissance instantanée afin d'assurer un malaxage satisfaisant de la pâte et d'éviter le "bourrage" de l'appareil, c'est-à-dire son blocage en charge par suite d'un taux de remplissage excessif.

Ce type de malaxeur a été décrit notamment dans les brevets CH-A-515 061, CH 606 498 et FR-A-2 038 173 au nom de BUSS A.G.

Le réglage du taux d'ouverture des clapets de sortie peut être effectué manuellement, mais le plus souvent, on met en oeuvre une régulation basée sur la valeur de la puissance moyenne consommée par le moteur sur une courte période de temps (régulation analogique du type PID - Proportionnelle Intégrale Dérivée).

Si l'on observe l'allure de la courbe d'intensité en fonction du temps (directement proportionnelle à la puissance dans ce cas, l'alimentation du malaxeur étant effectuée en courant continu), on constate qu'elle présente la forme d'un pseudo-sinusoïde dont l'amplitude varie en fonction de différents paramètres (position des clapets, taux de remplissage du malaxeur, caractéristiques de la pâte, etc...).

La période de cette pseudo-sinusoïde est égale à la période du mouvement de va et vient de l'axe du malaxeur qui est de l'ordre de la seconde ou un peu supérieure.

Du fait de ce double mouvement mécanique et dans le cas de l'utilisation d'une régulation analogique PID, on est amené à introduire un filtre à constante de temps RC pour niveler les oscillations de courte période dues au cycle du malaxeur (avance et recul de l'arbre principal).

La position des clapets est alors asservie à une valeur d'intensité moyenne qui dépend de la constante de temps du circuit RC. De préférence, la constante de temps T = RC est choisie au moins égale à la période du mouvement avant-arrière de l'arbre malaxeur. Cette régulation simple présente cependant l'inconvénient, dans certains cas, de ne pas être suffisamment rapide pour éviter les effets de bourrage de l'appareil, particulièrement lorsque l'on recherche une puissance moyenne de malaxage élevée proche du maximum que peut fournir le moteur. En outre, l'exploitant, par mesure de sécurité, utilise le malaxeur sensiblement en-dessous de sa capacité maximale de façon qu'en cas de bourrage, il dispose d'une réserve de puissance suffisante du moteur pour surmonter le bourrage et remettre le malaxeur en marche.

Pour un certain nombre de fabrications qui exigent une grande régularité et des caractéristiques élevées des agglomérés carbonés, par exemple les anodes pour la production électrolytique d'aluminium, le procédé de régulation analogique du malaxage ne permet pas toujours d'atteindre le niveau optimal de qualité et de régularité des anodes que réclament les exploitants, et la sous-utilisation de la capacité disponible est une contrainte gênante.

On a, par ailleurs, constaté qu'il était nécessaire, pour obtenir la meilleure qualité d'anodes, d'optimiser et/ou de maximiser la puissance de malaxage, en kilowatts-heure par tonne de pâte et d'appliquer cette puissance de façon très homogène sur toute la pâte sortant du malaxeur ou de la chaîne de malaxage.

Il faut donc faire appel à une régulation très fine du malaxage, c'est-à-dire, en pratique, du taux d'ouverture des clapets de sortie du malaxeur, en fonction de la puissance instantanée absorbée sur le moteur, ce que la régulation analogique n'assure que de façon imparfaite puisqu'elle intègre les variations d'intensité sur un ou plusieurs cycles de rotation

- 4 -

de l'arbre du malaxeur.

## DESCRIPTION DE L'INVENTION

L'invention est basée sur l'analyse du fonctionnement du malaxeur et sur l'observation des variations de l'intensité absorbée par le moteur au cours des cycles successifs du mouvement d'avance et de recul de l'arbre rotatif (figure 2):

Au lieu de mesurer l'intensité en continu, comme dans la régulation analogique, on mesure l'intensité par échantillonnage de quatre valeurs instantanées pour chaque cycle.

Le principe de cette régulation par échantillonnage est le suivant : on mesure l'intensité absorbée par le moteur pour deux positions particulières de l'axe du malaxeur dans son mouvement avant-arrière, ces positions étant détectées au moyen de deux capteurs fixes (8) (figure 1). Deux mesures d'intensité IV1 et IV2 sont effectuées lorsque l'arbre est en position "avant", et deux mesures IA1 et IA2 lorsque l'arbre est en position "arrière". La courbe de variation de l'intensité en fonction du temps, pour chaque cycle, apparaît sur la figure 2.

La première mesure IV1 est effectuée au moment où chaque dent mobile de l'arbre arrive pratiquement en butée avant, par l'intermédiaire d'une couche de pâte carbonée, avec les dents fixes correspondantes, et où s'effectue l'extrusion de la pâte hors du malaxeur.

La deuxième mesure IV2 est effectuée lorsque l'intensité absorbée passe par un premier minimum de puissance correspondant sensiblement au début du mouvement de recul de l'arbre; les dents mobiles, du fait de la rotation de l'arbre, se trouvent maintenant dans l'intervalle entre les dents fixes. Il n'y a donc plus compression de la pâte entre dents fixes et dents mobiles, mais simplement malaxage, et l'effort demandé au moteur diminue quelque peu.

La troisième mesure IA1 est effectuée lorsque les dents mobiles de l'arbre, qui poursuit son mouvement de recul, commencent à comprimer la pâte carbonée contre les dents fixes correspondantes situées en arrière.

Enfin, la quatrième mesure IA2 est effectuée lorsque la puissance absorbée par le moteur passe par un second minimum correspondant au moment où, l'arbre ayant à nouveau inversé son mouvement, les dents mobiles repassent entre les dents fixes.

Les deux valeurs importantes pour la régulation sont IA2 et IV2, c'est-à-dire les deux minima. Il importe donc d'ajuster la position des capteurs fixes (8) afin de faire coïncider les mesures de IA2 et IV2 avec les minima d'intensité.

Le paramètre principal de la régulation est IV2 qui peut être associé à la notion de pression d'extrusion de la pâte hors du malaxeur. Cette valeur est donc introduite dans l'algorithme de régulation du degré d'ouverture des clapets et, en particulier, de la façon suivante qui est donné comme un exemple, non limitatif, de mise en oeuvre de l'invention:

Le taux d'ouverture des clapets en pour-mille au cours du cycle n est donné par la relation :

$$(1000/P) \left[ (C - I_n) + \sum_0^n (I/1000) \times (C - I_n) \right] + 500 \quad (I)$$

formule dans laquelle :
- P et I sont les paramètres de la régulation PID (Proprotionnelle Intégrale Dérivée), D étant pris = 0
- $I_n$ est la dernière valeur mesurée de l'intensité IV2, au cours du cycle n
- C est l'intensité de consigne
- 500 est une constante ajustable
- n et le rang du cycle considéré

Cependant, on constate que, pour les valeurs élevées de la puissance absorbée par le moteur, les variations de IV2 sont de moindre amplitude que celles de IA2 (figure 3) qui peuvent être considérées comme un paramètre représentatif du niveau de remplissage du malaxeur. Il en résulte deux conséquences:

a) l'expérience montre - et cela s'explique quand on analyse le fonctionnement du malaxeur - que l'augmentation rapide de IA2 est l'indice d'une tendance au "bourrage" du malaxeur. Cela signifie, en effet qu'au début du mouvement d'avance de l'arbre, les dents mobiles ne rencontrent pra-

- 6 -

tiquement plus de volumes libres et que la pâte carbonée ne va pas tarder à remplir la quasi-totalité du malaxeur. Dans un tel cas, si l'on n'intervient pas rapidement, l'arbre se bloque, le système de sécurité disjoncte l'alimentation électrique du moteur, et il faut, pour redémarrer, enlever manuellement une partie de la pâte carbonée - qui est chauffée à 160° C environ - Cette opération, longue et pénible, conduisait souvent les utilisateurs à sous-alimenter ou à sur-dimensionner les malaxeurs ou à les munir d'un moteur fortement sur-dimensionné pour éviter le bourrage ou parer à ses conséquences, d'où augmentation sensible des coûts d'exploitation.

La mise en oeuvre du système de régulation, selon l'invention, permet de détecter l'approche du bourrage lorsque IA2 dépasse un seuil absolu prédéterminé SB, et de réagir immédiatement, soit en ouvrant les clapets de sortie, soit en accélérant la vitesse de rotation du malaxeur, soit les deux simultanément.

b) pour tenir compte, dans le système de régulation, du taux de remplissage déduit de la valeur d'IA2, on compare, à chaque cycle, la valeur de ce paramètre IA2 à celle d'un seuil flottant P2 déterminé à partir du point d consigne d'intensité C. Tant que IA2 < P2, le paramètre de régulation $I_n$ reste égal à IV2 comme indiqué précédemment.

Dans le cas où IA2 devient > P2, le paramètre de régulation $I_n$ est calculé après incrémentation de IV2 d'une quantité prédéterminée, par exemple :

$$I_n = IV2 + (IA2 - P2) \qquad (2)$$

Dans le cas de la figure 3, par exemple, si l'on a :

IV2 = 465 ampères

IA2 = 240 ampères

P2 = 210 ampères

on aura : $I_n$ = 465 + (240 - 210) = 495 ampères

C'est donc cette valeur de 495 A (au lieu de 465 A) qui sera introduite dans la régulation, dont la réponse, rendue de ce fait plus rapide, entraînera une ouverture des clapets supérieure à ce qu'elle aurait été pour un IV2 de 465 A, ce qui aura pour effet de s'opposer à l'apparition du bourrage. On pourra donc, par ce moyen utiliser en permanence, sans risque, le malaxeur au voisinage de sa puissance maximale.

En plus de ce seuil flottant P2, on utilise également deux seuils fixes S1 et S2, de valeur plus élevée que P2, auxquels IA2 est également comparé en permanence.

Dans le cas où IA2 dépasse le premier (respectivement le second S2) seuil fixe S1, la différence entre IA2 et S1 (respectivement S2) est ajoutée x fois, par exemple trois fois (respectivement y fois, quatre fois par exemple) à la valeur de $I_n$ calculée comme ci-dessus (équation 2). Si bien que le paramètre de régulation $I_n$ (en ampères) devient :

Si IA2 < P2, on a $\quad I_n = IV2_{(n)}$ $\qquad\qquad\qquad$ (3)

Si P2 < IA2 < S1, on a $\quad I_n = IV2_{(n)} + (IA2 - P2)$ $\qquad$ (4)

Si S1 < IA2 < S2, on a $\quad I_n = IV2_{(n)} + (S1 - P2) + 3 (IA2 - S1)$ $\quad$ (5)

Si S2 < IA2 < SB, on a $\quad I_n = IV2_{(n)} + (S1 - P2) + 3 (S2 - S1)$
$$+ 4 (IA2 - S2) \quad (6)$$

Si IA2 > SB, on ne fait plus intervenir $I_n$. On procède à une "réaction d'urgence" contre le bourrage en ouvrant les clapets de sortie et/ou en augmentant la vitesse du malaxeur.

Les niveaux respectifs (exprimés en ampères) du paramètre C et des seuils P2, S1, S2 et SB sont fixés par l'exploitant en fonction du type de malaxeur utilisé et des conditions de travail (par exemple, composition et température de la pâte carbonée). Il en est de même pour les facteurs multiplicatifs x et y (respectivement 3 et 4 dans l'exemple ci-dessus) des valeurs des incréments de correction (IA2 - S1), (S2 - S1), (IA2 - S2) qui sont donnés à titre d'exemples non limitatifs.

Ce dispositif de régulation, implanté sur un automate programmable, permet donc de réguler la position des clapets de sortie du malaxeur ou de tout autre dispositif équivalent contrôlant l'écoulement de la pâte carbonée à la sortie du malaxeur - de façon à optimiser ou à maximiser la puissance en kilowatts-heure absorbée par tonne de pâte produite, sans risque de bourrage et en utilisant le malaxeur au voisinage de sa capacité maximale.

## MISE EN OEUVRE DE L'INVENTION

En pratique, l'invention est mise en oeuvre dans les conditions suivantes :

- on fixe la valeur de l'énergie de malaxage que l'on veut appliquer à la pâte carbonée, en kilowatts-heure par tonne,
- on fixe le débit horaire du malaxeur, qui sera, en principe, le débit nominal fixé par le constructeur, et qui correspondra au poids total coke + liant introduit en tête de la chaîne de malaxage,
- on fixe l'intensité maximale C de consigne du courant alimentant le moteur du malaxeur.
- on met le malaxeur en marche et on l'alimente en coke + liant,
- on mesure, par échantillonnage, à chaque cycle les valeurs instantanées des intensités IV1, IV2, IA1, IA3, comme indiqué précédemment.
- à chaque cycle n :

a) on compare la valeur de $IA2_{(n)}$ à la valeur de P2 calculée par le système en fonction du paramètre de consigne C ainsi qu'aux différent seuils fixes prédéterminés S1, S2 et SB

b) Si $IA2_{(n)} < P2$, la variable de régulation $I_n$ reste égale à $IV2_{(n)}$

c) Si $IA2_{(n)} > P2$, la variable de régulation $I_n$ est calculée par l'autcmate, en ajoutant à $IV2_{(n)}$ une quantité déterminée à partir de la valeur de $IA2_{(n)}$ par rapport aux différents seuils P2, S1, S2, comme indiqué précédemment (équations 3 à 6).

On introduit la valeur de la variable de régulation $I_n$ dans l'algorithme d régulation à partir duquel le régulateur détermine le taux optimal d'ouver ture des clapets et assure, en outre, les différentes sécurités. En particulier, lorsque la chaîne de malaxage comporte deux malaxeurs en série, le régulateur contrôle également le second malaxeur et s'assure de la compatibilité entre le débit instantané du premier et le débit instantané du second, qui doit être au moins égal à celui du premier sous peine de bour- rage très rapide du second.

De façon générale, la régulation selon l'invention peut être appliquée soi au premier malaxeur, soit au second, soit aux deux simultanément en s'as-

- 9 -

surant d'une compatibilité entre les débits instantanés de chacun d'eux
pour éviter les risques de bourrage.

EXEMPLES PRATIQUES DE MISE EN OEUVRE DE L'INVENTION

On a effectué une série d'essais sur une chaîne de malaxage composée de
deux malaxeurs du premier type (K 600 et K 550 KE) fabriqués par les
Ets BUSS A.G., ayant un débit horaire proche d'une trentaine de tonne
par heure et disposés en série.

La pâte, destinée à la fabrication d'anodes précuites pour la production
d'aluminium, étant composée de coke de pétrole, de densité apparente au
mercure = 1,72 g/cm$^3$ et de 14,5 % de brai de houille de point de ramollissement 110° Mettler. Le malaxage a été effectué à 160° C environ.

EXEMPLE 1

A titre de comparaison, une première série de 100 anodes pour l'électrolyse de l'aluminium a été produite dans les conditions habituelles de
l"art antérieur de manière à obtenir une énergie de malaxage d'environ
3,8 kWh/t de pâte (soit une puissance absorbée par le moteur d'entraînement de 105 kW).

EXEMPLE 2

Une deuxième et une troisième série d'essais, portant également sur
100 anodes, ont été réalisées en asservissant conformément à l'invention
l'ouverture des clapets du premier malaxeur à la puissance consommée par
son moteur, de façon que l'énergie de malaxage soit de 4,9 kWh/t de pâte
dans le deuxième essai, et de 7,3 kWh/t de pâte dans le troisième essai.
La puissance absorbée par le moteur d'entraînement était de 135 kW dans
le second essai et de 200 kW dans le troisième essai, c'est-à-dire pratiquement la puissance maximale pour laquelle il a été prévu.

Pour les trois séries d'essais, les clapets du deuxième malaxeur ont été
maintenus à la même position, correspondant à une énergie de malaxage de
2,5 kWh/t de pâte (soit une puissance absorbée de 74 kW).

La pâte malaxée a été mise en forme, par vibro-tassage et les anodes ont
été cuites (à environ 1100° C) dans les conditions habituelles, dans un

— 10 —

four à chambres à feu tournant.

On a prélevé des échantillons et mesuré les caractéristiques des anodes produites dans les trois séries d'essais et on a obtenu les résultats suivants :

| | Art antérieur | Selon l'invention | |
| | Essai n° 1 | Essai n° 2 4,9 + 2,7 kWh/t | Essai n° 3 7,3 + 2,7 kWh/t |
|---|---|---|---|
| Densité g/cm$^3$ | 1,55 ± 0,02 | 1,592 ± 0,011 | 1,594 ± 0,014 |
| Résistivité électrique $\mu\Omega$ cm | 5600 ± 170 | 5120 ± 122 | 5060 ± 54 |
| Résistance à l'écrasement en MPa | 425 ± 30 | 500 ± 32 | 504 ± 43 |

Cet exemple montre que la mise en oeuvre de l'invention apporte un gain important sur les valeurs moyennes aussi bien que sur la dispersion de ces valeurs, ces derniers résultats pouvant être attribués à une meilleure homogénéité de la pâte due à la stabilisation dans le temps de l'énergie de malaxage.

L'utilisation sur des cuves d'électrolyses d'anodes obtenues à partir de pâtes carbonées ainsi obtenues se traduit par des améliorations sensibles des résultats d'exploitation :

- jusqu'à 40 kWh/t d'aluminium, en raison de la baisse de la résistivité des anodes,
- jusqu'à 5 kg de carbone/tonne d'Al,
- allongement d'environ 1 jour de la durée de vie utile des anodes, donc gain corrélatif sur les coûts d'exploitation.

- 11 -

REVENDICATIONS

1°/ Procédé de régulation en continu de l'énergie de malaxage des pâtes destinées à la fabrication d'agglomérés carbonés dans une chaîne de malaxage continu, ces pâtes étant constituées par un mélange de grains carbonés et d'un liant organique introduit à l'état solide ou liquide, le malaxeur étant constitué d'un corps tubulaire garni, sur sa surface interne, d'une pluralité de dents fixes inclinées par rapport à l'axe du corps tubulaire à l'intérieur duquel est disposé un arbre rotatif, coaxial avec le corps tubulaire, animé d'un mouvement de va et vient synchronisé avec un mouvement de rotation assuré par un moteur à courant continu, cet arbre étant muni de dents coopérant avec les dents fixes pour assurer le pétrissage et l'écoulement de la pâte carbonée, la sortie du malaxeur étant munie d'une buse dont le degré d'ouverture est fixé par des clapets motorisés, caractérisé en ce que l'on effectue successivement les opérations suivantes :

- on fixe la valeur de l'énergie de malaxage que l'on veut appliquer à la pâte carbonée, en kilowatts-heure par tonne, le débit horaire du malaxeur et l'intensité de consigne $C$ du courant alimentant le moteur,
- on met le malaxeur en marche,
- on mesure l'intensité absorbée par le moteur qui est proportionnelle à la puissance, le moteur étant alimenté en courant continu sous une tension sensiblement constante,
- on échantillonne, à chaque cycle du mouvement de va et vient de l'arbre, quatre valeurs de l'intensité,
  .$IV1$ et $IV2$ lorsque l'arbre est en position avant et $IA1$ et $IA2$ lorsque l'arbre est en position arrière.

  $IV1$ est mesurée au moment où chaque dent mobile de l'arbre arrive pratiquement en butée, par l'intermédiaire d'une couche de pâte carbonée, avec les dents fixes correspondantes et où s'effectue l'extrusion de la pâte hors du malaxeur

  $IV2$ est mesurée lorsque l'intensité passe par un premier minimum correspondant sensiblement au début du mouvement de recul de l'arbre

  $IA1$ est mesurée lorsque les dents mobiles de l'arbre, qui poursuit son mouvement de recul, commencent à comprimer la pâte carbonée contre les dents fixes correspondantes situées en arrière.

  $IA2$ est mesurée lorsque l'intensité passe par un second minimum corres-

0157987

pondant au moment où, l'arbre ayant inversé son mouvement, les dents mobiles passent entre les dents fixes.

On introduit, dans l'algorithme de régulation, la valeur $I_n$ de l'intensité IV2 mesurée au cours du cycle n, à partir de laquelle le régulateur détermine le taux d'ouverture des clapets.

2°/ Procédé de régulation, selon revendication 1, caractérisé en ce que le taux d'ouverture des clapets, en pour-mille, est déterminé par la relation :

$$(1000/P) \left[ (C - I_n) + \Sigma_o^n (I/1000) (C - I_n) \right] + 500$$

P et I étant les paramètres de régulation Proportionnelle Intégrale, C la valeur de consigne de l'intensité,

$I_n$ la valeur de l'intensité IV2 au cours du cycle n n est le rang du cycle considéré 500 est une constante ajustable du système de régulation

3°/ Procédé de régulation selon revendication 1 ou 2, caractérisé en ce que, à chaque cycle n, on compare la valeur de IA2 à un certain nombre de seuils d'intensité de valeur croissante et en ce que l'on introduit dans le régulateur une valeur $I_n$, de IV2 incrémentée d'une valeur déterminée à partir de la position de IA2 par rapport à ces différents seuils.

4°/ Procédé de régulation selon revendication 3, caractérisé en ce que l'on fixe 4 seuils successifs d'intensité croissante : P2, S1, S2 et SB, auxquels on compare IA2 à chaque cycle n.

Si IA2 est inférieur à P2, on garde $I_n = IV2_{(n)}$

Si P2 < IA2 < S1, on prend $I_n = IV2_{(n)} + (IA2 - P2)$

Si S1 < IA2 < S2, on prend $I_n = IV2_{(n)} + (S1 - P2) + x (IA1 - S1)$

Si S2 < IA2 < SB, on prend $I_n = IV2_{(n)} + (S1 - P2) + x (S2 - S1) + y (IA2-S2)$

5°/ Procédé de régulation selon revendication 3 ou 4, caractérisé en ce que, si $IA2_{(n)} >$ SB, on procède à une réaction d'urgence contre le bourrage du malaxeur en ouvrant les clapets et/ou en augmentant sa vitesse de rotation.

6°/ Procédé de régulation, selon l'une quelconque des revendications 1 à 5, caractérisé en ce que, lorsque la chaîne de malaxage comporte deux malaxeurs en série, on effectue la régulation sur le premier malaxeur et on vérifie que le débit instantané du second est au moins égal au débit instantané du premier.

7°/ Procédé de régulation, selon revendication 6, caractérisé en ce que l'on agit sur la vitesse de rotation du second malaxeur pour absorber l'excès de débit instantané provenant du premier malaxeur dont l'ouverture des clapets ou la vitesse ont été augmentées pour éviter un bourrage.

8°/ Procédé de régulation, selon l'une quelconque des revendications 1 à 6, caractérisé en ce que, lorsque la chaîne de malaxage comporte deux malaxeurs en série, on effectue la régulation sur le second malaxeur et on agit sur le débit du premier pour qu'il soit inférieur ou au plus égal à celui du second.

9°/ Procédé de régulation, selon l'une quelconque des revendications 1 à 7, caractérisé en ce que, lorsque la chaîne de malaxage comporte deux malaxeurs en série, on effectue la régulation sur les deux malaxeurs et on agit sur le débit instantané du second de façon qu'il soit au moins égal à celui du premier.

0157987

1-1

FIG.1

I AMPERES

1 CYCLE (EX:1,3)

TEMPS EN SECONDES

FIG.2

IV1   IV2   IA1   IA2

IV2 AMPERES

I MAX:520A

IA2 AMPERES

FIG.3